(19) Europäisches Patentamt / European Patent Office / Office européen des brevets

(11) **EP 3 761 054 A1**

(12) **EUROPEAN PATENT APPLICATION**

(43) Date of publication:
06.01.2021 Bulletin 2021/01

(51) Int Cl.:
*G01S 7/40* (2006.01)   *G01S 13/93* (2020.01)
*G01S 17/93* (2020.01)   *G01S 7/497* (2006.01)
*G01S 7/52* (2006.01)   *G01S 15/93* (2020.01)

(21) Application number: 19184424.0

(22) Date of filing: 04.07.2019

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Veoneer Sweden AB**
**447 83 Vårgårda (SE)**

(72) Inventors:
• **Klotzbuecher, Dirk**
**97464 Niederwerrn (DE)**
• **Eisenmann, Stefan**
**97464 Niederwerrn (DE)**
• **Schmied, Julian**
**97464 Niederwerrn (DE)**

(74) Representative: **Westpatent AB**
**Almekärrsvägen 11**
**443 39 Lerum (SE)**

(54) **SENSOR CALIBRATION BASED ON STRINGS OF DETECTIONS**

(57)   A method for calibrating an angle measurement (122) of a vehicle sensor (110) adapted to be in a vehicle (100), the method comprising
obtaining a sequence of detections associated with a stationary target (140),
determining a corresponding sequence of ground truth values associated with the stationary target (140), wherein the ground truth values are determined based on a minimum detected distance from the vehicle (100) to the stationary target (140) and on a track of the vehicle (100), estimating a difference (250) between the sequence of detections (210) and the sequence of ground truth values, and
calibrating the angle measurement (122) based on the estimated difference (250).

FIG. 1

EP 3 761 054 A1

**Description**

DESCRIPTION OF THE DISCLOSURE

The present disclosure relates to a vehicle sensor, according to some aspects to a radio detection and ranging (radar) transceivers for use with vehicles.

Modern vehicles often comprise one or more radar transceivers arranged to detect objects in a vicinity of the vehicle. The objects may be stationary objects such as guard rails and traffic islands, or they can be moving objects such as other vehicles.

Radar transceivers are configured to estimate distances between the transceiver and detected objects, for instance based on transmission of a frequency modulated continuous wave (FMCW) signal. The relative velocity of the detected object with respect to the radar transceiver can also be determined based on a Doppler shift in received waveforms.

Some radar transceivers are also arranged to estimate a bearing to a detected object in addition to distance and relative velocity. This bearing estimation can be achieved by using array antennas configured to determine relative phases of waveform components received at the different antenna elements in the antenna array. Bearing estimation, i.e., estimating relative angle to a detected object with respect to, e.g., a boresight direction of the radar transceiver is a difficult problem in general. One aspect which makes the problem particularly difficult is that the bearing estimation requires careful calibration of the radar transceiver in order to be accurate.

Known algorithms for calibrating a radar transceiver to improve bearing estimation accuracy include methods that use a ratio between relative velocity of a detected stationary object compared to a velocity of the radar transceiver, e.g., a velocity of the vehicle on which the radar transceiver is mounted. The bearing $\vartheta$ can then be estimated or otherwise obtained from the expression

$$\cos\vartheta = \frac{v_D}{v_V}$$

where $v_D$ represents relative velocity obtained from Doppler measurement, and where $v_V$ represents radar transceiver velocity obtained from, e.g., a Global Positioning System (GPS) receiver or from a wheel speed sensor.

A problem with the above approach is that the calibration accuracy strongly depends on vehicle speed accuracy. An error in the determination of $v_V$ of only a few percent can result errors in calibration of bearing of several degrees. Such errors are often not acceptable in safety critical applications such as level 4 (L4) autonomous driving, advanced driver assistance systems (ADAS), and the like.

More accurate methods for calibrating radar transceivers, as well as other types of vehicle sensors such as Lidar (Light Detection and Ranging) sensors, camera sensors, or ultrasonic sensors, in terms of bearing are needed. Such methods should preferably be of limited computational complexity in order to conserve radar transceiver processing resources which are often restricted.

It is an object of the present disclosure to provide a method for calibrating an angle measurement of a vehicle sensor in a vehicle which alleviate at least some of the above mentioned drawbacks. It is also an object of the present disclosure to provide corresponding control units, computer program products and vehicles.

This object is obtained by a method for calibrating an angle measurement of a vehicle sensor in a vehicle. The method comprises obtaining a sequence of detections associated with a stationary target, determining a corresponding sequence of ground truth values associated with the stationary target, wherein the ground truth values are determined based on a minimum detected distance from the vehicle to the stationary target and on a track of the vehicle. The method also comprises estimating a difference between the sequence of detections and the sequence of ground truth values and calibrating the angle measurement based on the estimated difference.

The method achieves angle calibration without relying on vehicle velocity, which is an advantage. The method instead uses a minimum detected distance to a stationary object, which is data that can be obtained with relatively high accuracy. Thus, a robust and accurate way to calibrate vehicle sensors is provided.

The method can be performed on-line while operating the vehicle, which is an advantage since it allows for continuously maintaining vehicle sensor calibration over time.

According to aspects, the obtaining comprises detecting a stationary object in a target list associated with the vehicle sensor. It is an advantage that the method can be applied to normal target lists obtained from vehicle sensors. No major redesign is required in the vehicle sensor in order to be able to perform the calibration routine.

According to aspects, the obtaining comprises obtaining detections when the vehicle is driving in a straight line. By limiting the method to straight, or at least substantially straight, driving scenarios, more complicated motion patterns of the vehicle and their impact on the end result can be disregarded. This way method complexity is further limited, which is an advantage since processing resources of the vehicle sensor or of some associated processing system is conserved.

According to aspects, the obtaining comprises obtaining detections when the vehicle enters a pre-determined calibration area. Some areas may be more suitable than others for performing the proposed methods. Such areas can be identified in advance and this information communicated to vehicles. Thus, by executing the methods preferably in these types of calibration areas, overall calibration performance can be improved.

According to aspects, the obtaining comprises rejecting detections associated with a side lobe of the vehicle sensor. Sensor detections such as for example radar detections often comprise side lobes extending on the sides of a sensor main lobe. Side lobe detections may reduce performance of the method. However, by rejecting side lobe detections these effects can be reduced, which is an advantage.

According to aspects, the method also comprises adjusting the ground truth values based an estimated track of the vehicle. This way additional calibration data can be obtained, e.g., since the method is not limited to straight driving scenarios. By accounting for vehicle motion in addition to the minimum distance, the method becomes applicable in a wider range of driving scenarios, which is an advantage.

According to aspects, the method comprises filtering differences by a moving median window. This way the impact of outlier measurements is reduced, which is an advantage.

According to aspects, the calibrating comprises weighting based on the obtained sequence of detections. Some detection sequences are likely to be better than others, i.e., are likely to result in more accurate calibration data. For instance, data sequences obtained in certain areas known to be suitable for calibration based on the proposed methods may result in higher weights compared to sequences obtained in areas known to be unsuitable for calibration. This way the robustness of the proposed methods is improved.

According to aspects, the calibrating comprises weighting based on the vehicle track during obtaining the detections. Most likely the straight driving scenarios are associated with higher calibration performance compared to more complicated calibration scenarios where the vehicle is maneuvering. By accounting for vehicle motion, method performance improves.

There are also disclosed herein vehicles, control units and computer program products associated with the above-mentioned advantages.

BRIEF DESCRIPTION OF THE DRAWINGS

The present disclosure will now be described in more detail with reference to the appended drawings, where:

Figure 1      illustrates a vehicle with a sensor system;

Figure 2      is a graph showing example sensor detections;

Figure 3      is a graph showing example detection distances;

Figure 4      is a flow chart illustrating methods;

Figures 5-6   show example control units; and

Figure 7      shows an example computer program product.

DETAILED DESCRIPTION

Aspects of the present disclosure will now be described more fully hereinafter with reference to the accompanying drawings. The different arrangements, devices, systems, computer programs and methods disclosed herein can, however, be realized in many different forms and should not be construed as being limited to the aspects set forth herein. Like numbers in the drawings refer to like elements throughout.

The terminology used herein is for describing aspects of the disclosure only and is not intended to limit the invention. As used herein, the singular forms "a", "an" and "the" are intended to include the plural forms as well, unless the context clearly indicates otherwise.

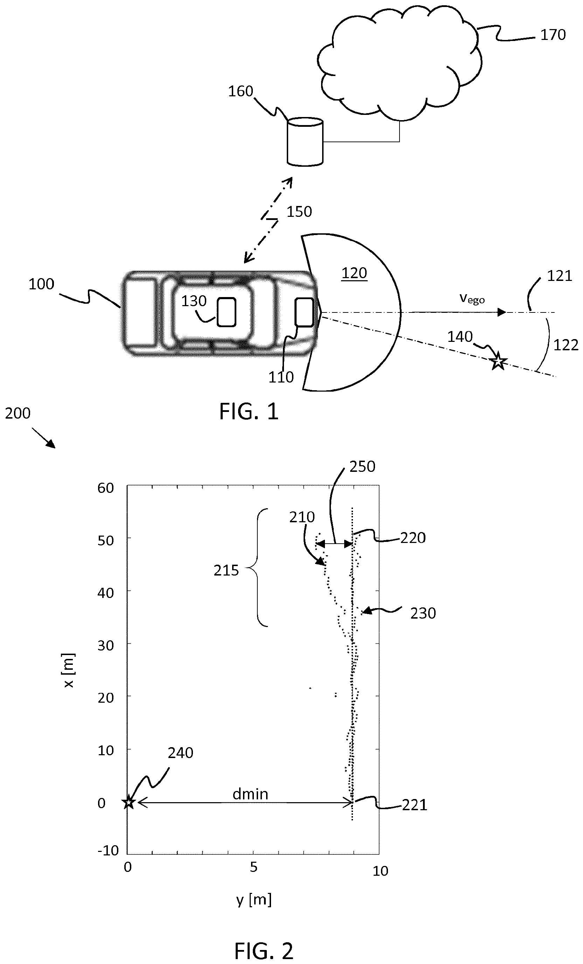

Figure 1 shows a vehicle 100 equipped with a vehicle sensor system 110, 130. The vehicle moves in a direction with velocity vector $v_{ego}$. The vehicle sensor system comprises a vehicle sensor 110 and a sensor data processing system 130. An optional storage module may also be comprised in the vehicle sensor system. The storage module may store map data comprising information about a surrounding environment of the vehicle 100. The storage module will be discussed in more detail below.

The sensor data processing system is arranged to control operation of the vehicle sensor 110, and to obtain data from the vehicle sensor 110, such as detections or data points corresponding to objects 140 in vicinity of the vehicle 100.

The vehicle sensor 110 may comprise a single sensor unit or a plurality of sensor units, potentially of different type and/or of different configuration. For instance, the vehicle sensor 110 may comprise any of a Lidar (Light Detection and Ranging) sensor, a radar sensor, a camera sensor, or an ultrasonic sensor. The vehicle sensor 110 may also comprise any of a TOF camera system, a structured light system, and a stereo vision system. The focus on the present disclosure will be on radar type sensors, but the techniques are also applicable to other types of sensors, in particular to Lidar sensors.

According to an example, the vehicle sensor 110 is arranged to generate a number of data points comprising coordinates in a relative coordinate system, i.e., relative to the location and orientation of the vehicle sensor 110. The coordinates may be Cartesian coordinates, or they may be polar coordinates. The vehicle sensor 110 may also be arranged to generate raw data, or a more refined feature vector extracted from the sensor data.

The data points may also comprise additional information, such as signal strength values or measures of signal-to-noise ratio (SNR).

One or more timestamps may also be associated with the information passing between the vehicle sensor 110 and the sensor data processing system 130. The time stamps may be assigned per data point or be common to a set of data points.

The vehicle sensor system 110,130 may be connected via wireless link 150 to a remote server 160, which in turn may be comprised in a remote network 170.

The vehicle sensor 110 is associated with a field of view 120. In case the vehicle sensor 110 is a front radar transceiver, a boresight direction 121 of the sensor 110 often coincides with a centre line of the field of view 120. In case the vehicle sensor is instead configured as a side sensor, then the boresight direction may point in some other angle compared to the direction of the vehicle 100.

Some radar transceivers comprise antenna arrays which enable estimating not only distance to an object but also a bearing, i.e., an angle 122 measured from the sensor boresight direction 121 to the detected object 140.

As mentioned above, such estimates of angle are often associated with relatively large error. Figure 2 shows an example of radar transceiver measurement data 200. The location of the radar transceiver is marked by a star 240 at coordinates (0,0). A sequence of detections 210 have been made with respect to a stationary object in vicinity of the radar transceiver. Here the vehicle was driving along a straight line, i.e., along the x-axis in Figure 2. However, due to calibration error, there is a spread in estimates of bearing to the detected object, which shows up as some deviation in the upper part 215 of the graph 200. It is desired to compensate for this error by calibrating the radar transceiver 110.

To perform the calibration, it is proposed herein to generate a series of ground truth detection values 220 by estimating how the sequence of detections would have looked if there were no angle errors. Notably, this estimation or prediction is based on the smallest distance detected between the vehicle and the obstacle. For many types of radars, the smallest distance $d_{min}$ detected between the vehicle and the obstacle corresponds to the point in time when the vehicle passes the obstacle, i.e., where the obstacle is located directly to the side of the vehicle. This point can then be extrapolated based on vehicle motion, i.e., based on how the vehicle moved up to the point when the minimum distance was detected. For instance, if the vehicle is driving in a straight line, then a reasonable sequence of ground truth values can be estimated as a straight line of detections starting from a point 221 directly to the side of the vehicle at the smallest detected distance. The straight line extends parallel to the direction the car was heading in up to the point in time when the smallest distance detection was made.

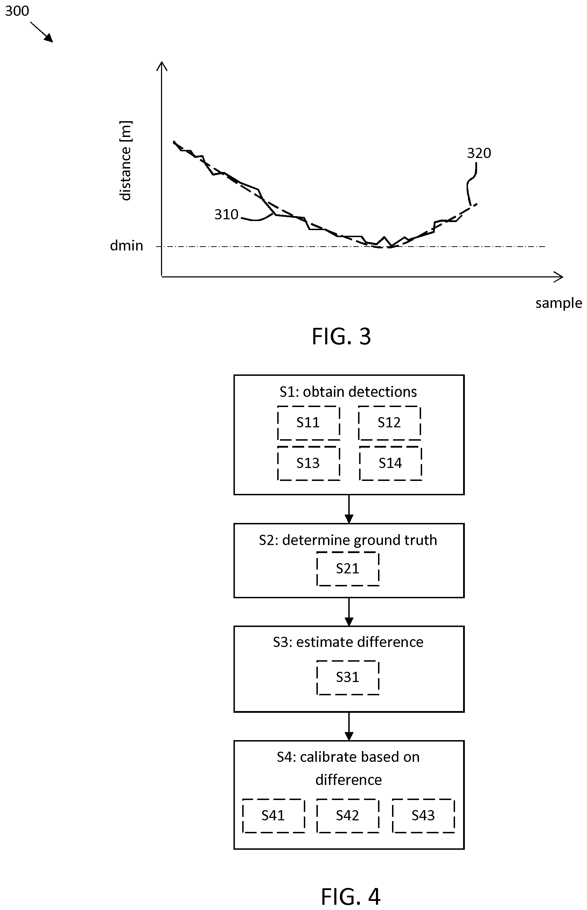

In the following, is also referred to Figure 3 that schematically illustrates example distances in a sequence of detections 310 associated with some stationary object. The minimum distance $d_{min}$ is indicated. According to some aspects, the distance measurements 310 are filtered 320, i.e., smoothed, in order to supress noise prior to determining the minimum distance. The filtered distance estimates are indicated by a dashed line in Figure 3.

The minimum distance $d_{min}$ detected with respect to the stationary object is assumed to be directly to the side of the vehicle, this location 221 is the reference point for the sequence of ground truth values 220. The vehicle path is then backtracked in order to generate a series of ground truth values. In case the vehicle was driving along a straight line, then the ground truth values will also be distributed along a straight line as shown in Figure 2, parallel to the track of the vehicle. However, if the vehicle was following some other path, then this path will be reflected in the series of ground truth values. For instance, a vehicle that was executing a turn before the smallest distance was detected will yield a sequence of ground truth values with a curvature corresponding to a backtracking of the vehicle motion based on, e.g., the vehicle turning rate or yaw rate, and potentially also based on vehicle velocity.

Having the actual radar detections 210 and the corresponding estimated ground truth 220, a calibration error can be determined by comparing the detections 210 to the corresponding estimated ground truth values. The difference between these two data sets can be used to correct the radar transceiver data and thus calibrate radar bearing. The corrected values 230 are indicated in Figure 2, and it is noted that the error has been reduced significantly.

According to some aspects, the sensor samples are obtained regularly spaced in time, not regularly spaced geometrically. In this case the distance between ground truth values may need to be varied as function of vehicle velocity up to the point in time when the smallest distance was detected.

Also, it is possible to interpolate between the estimated ground truth values in order to compensate for time offsets between the sensor samples and the estimated ground truth values.

To summarize, with reference to Figure 4, there is disclosed herein a method for calibrating an angle measurement 122 of a vehicle sensor 110 in a vehicle 100. The method comprises obtaining S1 a sequence of detections 210 associated with a stationary target 140. There are several known methods for classifying sensor detections, such as radar detections, as stationary (as opposed to being moving objects). For instance, the classification can be based on vehicle motion. A stationary object remains at the same geographical location as the vehicle moves, whereas dynamic objects have their own motion trajectory. By comparing vehicle motion to sensor detections, stationary objects can be identified, at least over time from. Stationary objects can also be identified based on data from a tracking algorithm configured to detect objects and to track the objects over time. It is noted that the classification problem comprises time averaging and is therefore not overly sensitive to errors in, e.g., vehicle velocity.

According to aspects, the obtaining comprises detecting S11 a stationary object in a target list associated with the vehicle sensor 110. By using stationary objects, problems related to estimating relative motion between two moving objects are avoided. Calibration performance is therefore increased.

According to aspects, the obtaining comprises obtaining S12 detections when the vehicle 110 is driving in a straight line. As exemplified and discussed in connection to Figure 2, the straight line driving scenario permits a particularly efficient generation of ground truth data.

According to aspects, the obtaining comprises obtaining S13 detections when the vehicle 110 enters a pre-determined calibration area. Some stretches of roadway may be more suitable for performing the method compared to others. For instance, some area may comprise suitable stationary objects giving strong sensor detections that can be used in the method. Such suitable stationary objects may even be placed by an operator or other third party in order to facilitate sensor calibration. With reference to Figure 1, a remote server 160 can be configured to store information about suitable calibration areas and communicate this information to the vehicle 100 over the wireless link 150. The vehicle may comprise a GPS receiver or the like enabling it to detect when it enters an area where it is advisable to perform the method, and where good results can be expected. For example, a suitable calibration area may comprise a straight section of road with good visibility and suitable stationary targets. It may be preferred to conduct the calibration in environments with a limited number of strong stationary targets in order to avoid problems related to target mix-up or the like.

According to aspects, the obtaining comprises rejecting S14 detections associated with a side lobe of the vehicle sensor 110. Side lobe detections will be associated with a larger angle error, since they are not obtained based on the boresight main lobe direction.

The method also comprises determining S2 a corresponding sequence of ground truth values 220 associated with the stationary target 140. Notably, the ground truth values are determined based on a minimum detected distance from the vehicle 110 to the stationary target 140 and on a track of the vehicle 110. The minimum detected distance was discussed above in connection to Figure 3.

According to aspects, the method also comprises adjusting S21 the ground truth values based an estimated track of the vehicle 110. The method does not require driving in a straight line as was the case in the example discussed in connection to Figure 2, rather, any vehicle track can be used with the method. The ground truth values will then be adjusted to account for the vehicle path during collection of the sensor detections up to and potentially also past the point in time when the smallest distance was detected. The reference point for the string of sensor detections is again the point with minimum distance, which may be assumed to be a location directly to the side of the car (at least in case of a front radar system).

As discussed above, the method then comprises estimating S3 a difference 250 between the sequence of detections 210 and the sequence of ground truth values 220 and calibrating S4 the angle measurement 122 based on the estimated difference 250.

According to aspects, estimating the difference comprises filtering S31 differences by a moving median window. A moving median window replaces individual results by a median value over a window. The main idea of the median window or filter is to run through the signal entry by entry, replacing each entry with the median of neighboring entries. The pattern of neighbors is called the "window", which slides, entry by entry, over the entire signal. For 1D signals, the most obvious window is just the first few preceding and following entries. This way measurement errors, and outlier results are suppressed. Of course, other types of windows may also be applied in this context.

According to aspects, the calibrating comprises weighting S41 based on the obtained sequence of detections. Some sequences of detections may, e.g., be associated with a high signal to noise ratio and can therefore be more relied upon that weaker detections.

According to aspects, the calibrating comprises weighting S42 based on the vehicle track during obtaining the detections. For instance, a straight line often gives better results than a more complicated vehicle maneuver track.

According to aspects, the calibrating comprises filtering S43 by a growing memory filter. This filtering reduces effects from noise and thus improves the end result. The filtering need not be by a growing memory filter, most known noise suppressing filters can be used with good effect to improve calibration results.

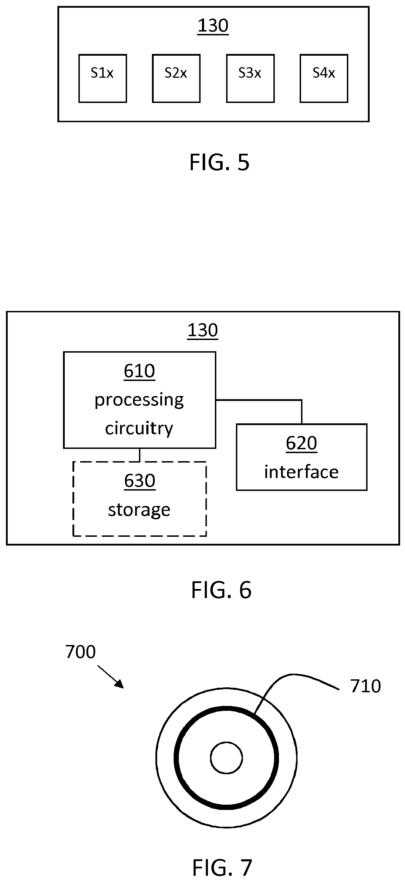

Figure 5 schematically illustrates a control unit 130 for calibrating an angle measurement 122 of a vehicle sensor 110 in a vehicle 100. The control unit comprises;

an obtaining unit S1x configured to obtain a sequence of detections 210 associated with a stationary target 140,

a determining unit S2x configured to determine a corresponding sequence of ground truth values 220 associated with the stationary target 140, wherein the ground truth values are determined based on a minimum detected distance from the vehicle 100 to the stationary target 140 and on a track of the vehicle 100,

an estimating unit S3x configured to estimate a difference 250 between the sequence of detections 210 and the sequence of ground truth values 220, and

a calibrating unit S4x configured to calibrate the angle measurement 122 based on the estimated difference 250.

Figure 6 schematically illustrates, in terms of a number of functional units, the components of a radio transceiver 130 according to an embodiment of the discussions herein. Processing circuitry 610 is provided using any combination of one or more of a suitable central processing unit CPU, multiprocessor, microcontroller, digital signal processor DSP, etc., capable of executing software instructions stored in a computer program product, e.g. in the form of a storage medium 630. The processing circuitry 610 may further be provided as at least one application specific integrated circuit ASIC, or field programmable gate array FPGA. The processing circuitry thus comprises a plurality of digital logic components.

Particularly, the processing circuitry 610 is configured to cause the system 130 to perform a set of operations, or steps. For example, the storage medium 630 may store the set of operations, and the processing circuitry 610 may be configured to retrieve the set of operations from the storage medium 630 to cause the system 130 to perform the set of operations. The set of operations may be provided as a set of executable instructions. Thus, the processing circuitry 610 is thereby arranged to execute methods as herein disclosed.

The storage medium 630 may also comprise persistent storage, which, for example, can be any single one or combination of magnetic memory, optical memory, solid state memory or even remotely mounted memory.

The sensor signal processing system 130 further comprises an interface 620 for communications with at least one external device. As such the interface 620 may comprise one or more transmitters and receivers, comprising analogue and digital components and a suitable number of ports for wireline communication.

The processing circuitry 610 controls the general operation of the system 130, e.g. by sending data and control signals to the interface 620 and the storage medium 630, by receiving data and reports from the interface 620, and by retrieving data and instructions from the storage medium 630. Other components, as well as the related functionality, of the control node are omitted in order not to obscure the concepts presented herein.

Figure 7 shows a computer program product 700 comprising computer executable instructions 710 to execute any of the methods disclosed herein.

**Claims**

1. A method for calibrating an angle measurement (122) of a vehicle sensor (110) in a vehicle, the method comprising obtaining (S1) a sequence of detections (210) associated with a stationary target (140), determining (S2) a corresponding sequence of ground truth values (220) associated with the stationary target (140), wherein the ground truth values are determined based on a minimum detected distance from the vehicle (100) to the stationary target (140) and on a track of the vehicle (100),

estimating (S3) a difference (250) between the sequence of detections (210) and the sequence of ground truth values (220), and
calibrating (S4) the angle measurement (122) based on the estimated difference (250).

2. The method according to claim 1, wherein the obtaining comprises detecting (S11) a stationary object in a target list associated with the vehicle sensor (110).

3. The method according to any previous claim, wherein the obtaining comprises obtaining (S12) detections when the vehicle (100) is driving in a straight line.

4. The method according to any previous claim, wherein the obtaining comprises obtaining (S13) detections when the vehicle (100) enters a pre-determined calibration area.

5. The method according to any previous claim, wherein the obtaining comprises rejecting (S14) detections associated with a side lobe of the vehicle sensor (110).

6. The method according to any previous claim, comprising adjusting (S21) the ground truth values based an estimated track of the vehicle (100).

7. The method according to any previous claim, wherein estimating the difference (250) comprises filtering (S31) differences by a moving median window or a noise suppressing filter.

8. The method according to any previous claim, wherein the calibrating comprises weighting (S41) based on the obtained sequence of detections.

9. The method according to claim 8, wherein the calibrating comprises weighting (S42) based on the vehicle track during obtaining the detections.

10. The method according to any previous claim, wherein the calibrating comprises filtering (S43) by a growing memory filter or a noise suppressing filter.

11. The method according to any previous claim, wherein the the vehicle sensor 110 comprises any of a Lidar, Light Detection and Ranging, sensor, a radar sensor, a camera sensor, or an ultrasonic sensor.

12. A computer program product (700) comprising program code (810) for performing the steps of any of claim 1-11 when said program is run on a computer.

13. A control unit (130) for calibrating an angle measurement (122) of a vehicle sensor (110) in a vehicle (100), the control unit (130) comprising;

an obtaining unit (S1x) configured to obtain a sequence of detections (210) associated with a stationary target (140),

a determining unit (S2x) configured to determine a corresponding sequence of ground truth values (220) associated with the stationary target (140), wherein the ground truth values are determined based on a minimum detected distance from the vehicle (100) to the stationary target (140) and on a track of the vehicle (100),

an estimating unit (S3x) configured to estimate a difference (250) between the sequence of detections (210) and the sequence of ground truth values (220), and

a calibrating unit (S4x) configured to calibrate the angle measurement (122) based on the estimated difference (250).

14. A vehicle (100) comprising the control unit (130) according to claim 13.

FIG. 1

FIG. 2

FIG. 3

FIG. 4

**130**

S1x  S2x  S3x  S4x

FIG. 5

**130**

**610**
processing
circuitry

**630**
storage

**620**
interface

FIG. 6

700

710

FIG. 7

Europäisches
Patentamt

European
Patent Office

Office européen
des brevets

# EUROPEAN SEARCH REPORT

Application Number

EP 19 18 4424

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DE 199 62 997 A1 (BOSCH GMBH ROBERT [DE]) 28 June 2001 (2001-06-28) * abstract * * column 4, line 3 - column 5, line 32; figures 1,2 * ----- | 1-14 | INV. G01S7/40 G01S13/93 G01S17/93 G01S7/497 G01S7/52 |
| A | DE 10 2015 119660 A1 (VALEO SCHALTER & SENSOREN GMBH [DE]) 18 May 2017 (2017-05-18) * abstract * * paragraphs [0036] - [0044]; figures 1-5 * * claim 1 * ----- | 1-14 | ADD. G01S15/93 |
| A | EP 3 290 945 A1 (AUTOLIV DEV [SE]) 7 March 2018 (2018-03-07) * abstract * * paragraphs [0018] - [0028]; figures 1,2 * * claim 1 * ----- | 1-14 | |

TECHNICAL FIELDS
SEARCHED       (IPC)

G01S

The present search report has been drawn up for all claims

| Place of search | Date of completion of the search | Examiner |
|---|---|---|
| Munich | 10 December 2019 | van Norel, Jan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 19 18 4424

This annex lists the patent family members relating to the patent documents cited in the above-mentioned European search report.
The members are as contained in the European Patent Office EDP file on
The European Patent Office is in no way liable for these particulars which are merely given for the purpose of information.

10-12-2019

| Patent document cited in search report | | Publication date | Patent family member(s) | | Publication date |
|---|---|---|---|---|---|
| DE 19962997 | A1 | 28-06-2001 | DE | 19962997 A1 | 28-06-2001 |
| | | | FR | 2803031 A1 | 29-06-2001 |
| | | | IT | MI20002668 A1 | 12-06-2002 |
| | | | JP | 2001227982 A | 24-08-2001 |
| | | | US | 2002072869 A1 | 13-06-2002 |
| DE 102015119660 | A1 | 18-05-2017 | DE | 102015119660 A1 | 18-05-2017 |
| | | | EP | 3374792 A1 | 19-09-2018 |
| | | | KR | 20180069020 A | 22-06-2018 |
| | | | US | 2018321378 A1 | 08-11-2018 |
| | | | WO | 2017080791 A1 | 18-05-2017 |
| EP 3290945 | A1 | 07-03-2018 | NONE | | |

EPO FORM P0459

For more details about this annex : see Official Journal of the European Patent Office, No. 12/82